# EUROPEAN PATENT APPLICATION

(11) **EP 4 814 861 A1**
(43) Date of publication of application: **30.09.2026**
(21) Application number: 25165944.7
(22) Date of filing: 25.03.2025
(51) Int. Cl.: G06T 7/00, G01B 11/24, G06T 7/11, G06T 7/12, G06T 7/194

(54) **METHOD AND SYSTEM FOR CHARACTERISING AT LEAST ONE EDGE DEFECT OF A WORKPIECE**

(71) Applicant: Leica Microsystems CMS GmbH, 35578 Wetzlar (DE); Leica Instruments (Singapore) Pte Ltd., Singapore 618299 (SG)
(72) Inventor: Managoli, Anjali, 35578 Wetzlar (DE); Scheffler, Kay, 35578 Wetzlar (DE)
(74) Representative: Schaumburg und Partner Patentanwälte mbB

(57) **Abstract**

In a first aspect, a method for characterising at least one edge defect (100) of a workpiece is provided. The method includes the step of determining a Feret diameter of the at least one edge defect (100). The method further includes the step of characterising the at least one edge defect (100) based on the determined Feret diameter. In a further aspect, a corresponding system (300) is provided.

## Description

### Technical field

The invention relates to a method for characterising at least one edge defect of a workpiece. The method includes determining a Feret diameter of the edge defect. A corresponding system for characterising at least one edge defect of a workpiece is also disclosed.

### Background

When machining or processing workpieces, edge defects can occur due to the machining or the handling of the workpieces. These edge defects can lead to problems during subsequent processing or use of these workpieces, depending on the severity of the edge defects and the specific application of the workpiece. For example, in case of load-bearing parts, edge defects may lead to stress concentrations and pose a risk to the structural integrity of the workpiece or a system the workpiece is integrated into. In case the workpiece is a battery part or an electronic part, edge defects may cause short circuits and pose a fire hazard. In any case, an edge defect may also be aesthetically undesirable.

Thus, there is a general need to reliably detect edge defects. More specifically, it is desirable to be able to accurately measure edge defects, for example, to be able to assess if they pose a quality issue or not. Typically, edge defects are assessed by manual measurements such as the length of an indentation or protrusion starting from the edge of the workpiece. These measurements are often simplistic and do not allow an accurate or reliable assessment of edge defects. Further, they may rely on a subjective decision of an operator, who performs the measurement.

### Summary

It is an object to provide a method and a system for characterising edge defects that is reliable, reproducible and efficient.

The aforementioned object is achieved by the subject-matter of the independent claims. Advantageous embodiments are defined in the dependent claims and the following description.

In a first aspect, a method for characterising at least one edge defect of a workpiece is provided. The method includes the step of determining a Feret diameter of the at least one edge defect. The method further includes the step of characterising the at least one edge defect based on the determined Feret diameter.

The workpiece can be machined or processed with a tool, for example by milling or by cutting with a knife. The machining or processing can be carried out manually or automatically. In particular, this machining or processing can result in the at least one edge defect of the workpiece. The edge defect may have been caused by the machining or processing of the workpiece, in particular of an edge of the workpiece. Alternatively, the edge defect may have been caused by (mis-)handling of the workpiece. Thus, the at least one edge defect may be arranged along an edge of the workpiece, in particular a machined or processed edge. In particular, the edge defects may be of microscopic size. In particular, this means that the edge defects may require an imaging device, such as a microscope, to be visualised. For example, the edge defects may have a size from a few micrometres up to several millimetres. In a particular example, the edge defects may have a size in a range between 1 µm to 10 mm. The workpiece may be made of a variety of materials or their combinations, for example a polymer and/or a metal.

The characterising of the at least one edge defect can alternatively or additionally be a categorising or classifying of the at least one edge defect.

Generally, the Feret diameter may be determined as the distance between two parallel tangents or planes on opposite sides of the at least one edge defect, in particular on opposite sides of a boundary of the at least one edge defect. In particular, the distance is measured along a defined orientation or direction around the at least one defect. The distance can be measured along a line perpendicular to the parallel tangents. The Feret diameter may alternatively be called a calliper diameter, referring to the measurement of the object size with a calliper.

The method enables providing a reproducible and accurate measurement of edge defects, that can be efficiently determined, in particular for edge defects with irregular boundaries or shapes.

In an embodiment of the method, imaging data of at least part of an edge of the workpiece is provided. This enables efficiently determining the Feret diameter of the at least one edge defect. This step may comprise imaging the at least part of an edge of the workpiece or the entire workpiece or edge. This is preferably carried out prior to determining the Feret diameter. The Feret diameter may then be determined based on the imaging data. The imaging data may be generated by means of an imaging device, such as a microscope. The imaging data may essentially be two-dimensional imaging data that may result from imaging the at least part of an edge in a focus plane of the imaging device. Thus, the Feret diameter may be determined in the plane the at least one edge or edge defect was imaged in. Since the at least part of an edge of the workpiece may be imaged and the Feret diameter may be determined based on the imaging date, the method may alternatively be a method for visually analysing or characterising at least one edge defect of a workpiece.

In an embodiment of the method, the at least one edge defect is identified, in particular in the image of the part of the edge of the workpiece and/or prior to determining the Feret diameter. This enables a robust determination of the Feret diameter and characterisation of the at least one edge defect. The at least one edge defect is preferably identified along the at least part of an edge of the workpiece. For example, the at least one edge defect may be identified image using processing methods, such as image segmentation.

In a particular embodiment, the at least one edge defect is identified based on a method for detecting or identifying edge defects on at least one workpiece. This method may comprise the step of providing imaging data of at least part of an edge of the at least one workpiece. The method may further comprise the steps of generating an edge intensity image based on the imaging data and generating a colour difference image based on the imaging data. Further, the method may comprise the step of segmenting the edge intensity image and the colour difference image to generate a respective binary edge intensity image or mask and a respective binary colour difference image or mask. A further step of the method may include comprise combining the binary edge intensity image and the binary colour difference image and generating a combined binary mask. Another step of the method may comprise fitting a curve to the at least part of an edge based on the combined binary mask, in particular, the curve may be fitted on the combined binary mask. The method may further comprise the step of detecting or identifying edge defects on the at least part of an edge of the at least one workpiece based on the curve fitted to the at least part of an edge, in particular based on the combined binary mask.

In particular, the steps of the method for detecting or identifying edge defects on at least one workpiece are performed in the order they are mentioned in the paragraph above. The imaging data may be provided as colour imaging data, such as RGB imaging data, for example. Further, the imaging data may comprise pixel data. The generated edge intensity image and/or the colour difference image may be greyscale images, in particular. The binary edge intensity image or mask may be a binary image, in particular, showing the edge as foreground and the rest of the image as background. Similarly, the binary colour difference image or mask may be a binary image, in particular, showing the workpiece as foreground and the rest of the image as background. The combined binary mask may separate the workpiece with its edge in the foreground from the rest of the image in the background. The detected or identified edge defects may be a protrusion or an indentation of the workpiece relative to the fitted curve, in particular.

In an embodiment of the method for characterising at least one edge defect of a workpiece, the Feret diameter is the maximum Feret diameter. This enables robustly characterising the at least one edge defect, in particular, this enables efficiently characterising the at least one edge defect relative to a predetermined Feret diameter threshold. In particular, the maximum Feret diameter is the longest possible Feret diameter measured in various orientations or angles around the at least one edge defect. Thus, in case the maximum Feret diameter is determined, the step of characterising the at least one edge defect may be based on the maximum Feret diameter.

In an embodiment of the method, a plurality of Feret diameters of the at least one edge defect is determined, in particular in the step of determining the Feret diameter. This enables a precise characterisation of the at least one edge defect. In particular, the step of characterising the at least one edge defect may be based on the plurality of Feret diameters of the at least one edge defect.

In an embodiment of the method, each of the Feret diameters of the plurality of Feret diameters is determined at a different orientation or angle. This enables robustly determining the maximum Feret diameter. Thus, the determined Feret diameters of the plurality of Feret diameters differ from each other in that they are each determined at a different orientation or angle. In particular, the different orientations refer to different directions in the image plane of the image of the workpiece. Thus, the different directions are not parallel to each other but are all at an angle to each other in the plane of the image.

In an embodiment, the at least one edge defect is characterised as one of: defective or non-defective. This enables efficient characterisation of the at least one edge defect. The characterisation may include further or other categories such as: reworkable, compliant, and/or non-compliant. In the step of characterising the at least one edge defect, the workpiece may also be characterised. The characterisation of the workpiece may be based on the characterisation of the at least one edge defect. For example, in case the workpiece comprises a plurality of edge defects and a certain number of these edge defects is characterised as defective, the workpiece may equally be characterised as defective.

In an embodiment of the method, the step of characterising the at least one edge defect comprises comparing the Feret diameter of the at least one edge defect to a threshold value. This enables efficiently characterising the at least one edge defect. For example, the threshold value may be predetermined by a user. Alternatively, the workpiece may have a plurality of edge defects, and the threshold value may be determined based on the Feret diameters of all the edge defects of the workpiece, for example an average Feret diameter. In an example, the threshold value may be a particular Feret diameter, above which an edge defect renders or is likely to render the corresponding workpiece defective, in this case, the edge defect is determined to exceed the threshold value, and the edge defect is characterised as defective. Similarly, the workpiece may be characterised as defective.

In an embodiment of the method, an output is generated based on the determined Feret diameter. The output may be a printed report, or a report shown on a display, for example to a user. This enables accurately recording results of the method as well as allow for an efficient decision-making of the user. The output may be for a particular one of the at least one edge defects and/or for a workpiece. The output may additionally or alternatively include or be based on the characterisation. In particular, the output may comprise a maximum Feret diameter.

In an embodiment the method is automated, in particular, at least some of the steps of determining the Feret diameter, characterising the at least one edge defect, and generating the output or report can be carried out automatically without user intervention. This enables efficient and reproducible characterisation of edge defects.

In an embodiment of the method, the at least one edge defect is a burr or a delamination. Thus, the method is applicable to a variety of edge defects. In particular, the edge defect is a burr of an edge of the workpiece or a delamination occurring at the edge of the workpiece.

A burr may be an indentation in the workpiece along an edge or a protrusion of material that remains attached to the workpiece after processing. A delamination may occur when processing an edge and layers of the workpiece or coatings on a surface of the workpiece are exposed at the edge and damaged or separated from the surface due to the processing, for example. The edge may be a linear edge or a curved edge, in particular the edge may be a circular edge, such as for a hole in the workpiece.

In another aspect, a system for characterising at least one edge defect of a workpiece is provided. The system comprises means configured to carry out the method for characterising at least one edge defect of a workpiece.

The system has the same advantages as the method. Further, the system may be supplemented with the features of the method described in this document, in particular, the features of the dependent claims of the method.

In an embodiment, the system comprises an imaging device configured to image at least part of an edge of the workpiece. For example, the imaging device may be a microscope. The system may further comprise a control unit configured to direct elements of the system to carry out the method. The control unit may comprise an integrated circuit, such as a field programmable gate array, for example. The control unit may further be configured to carry out the steps of the method.

The system may further have at least a display and/or an output device, such as a printer, which may present information concerning the at least one edge defect to a user.

### Short Description of the Figures

Hereinafter, specific embodiments are described referring to the drawings, wherein:
- Fig. 1: is a schematic view of an edge defect with Feret diameter measurements in two different orientations,
- Fig. 2: is a flow diagram of a method for characterising at least one edge defect of a workpiece, and
- Fig. 3: is a schematic view of a system for characterising at least one edge defect of a workpiece.

### Detailed Description

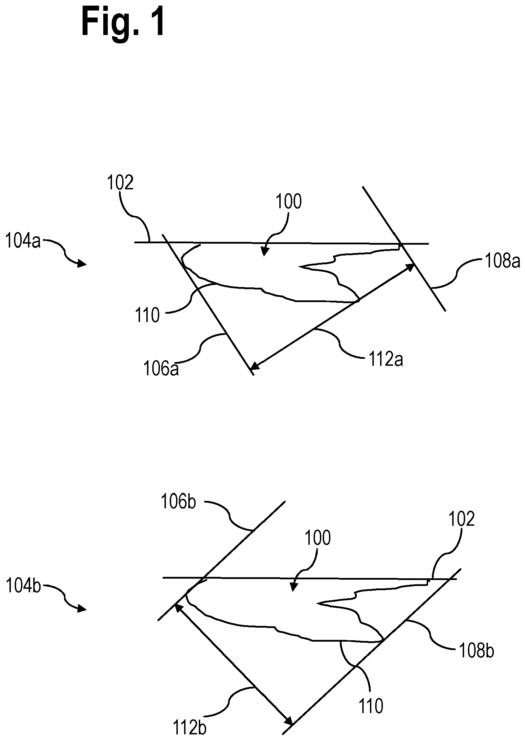

Figure 1 is a schematic view of an edge defect 100 with Feret diameter measurements in two different orientations 104a, 104b. The edge defect 100 is arranged along an edge 102 of a workpiece. In Fig. 1 at least a part of the edge 102 is shown.

The edge defect 100 may be a protrusion from the edge 102 or an indentation in the edge 102. For example, in case of the edge defect 100 being a protrusion, the workpiece would continue above the edge 102 in the plane of the view according to Fig. 1. In the other case of the edge defect 100 being an indentation, the workpiece would continue below the edge 102 in the plane of the view according to Fig. 1. Alternatively, the edge defect 100 may be a delamination along the edge 102. In any case, a first Feret diameter along a first orientation 104a and a second Feret diameter along a second orientation 104b may be determined for the edge defect 100.

Generally, the first and second Feret diameters are determined by fitting two pairs of parallel tangents 106a, 106b, 108a, 108b to a boundary 110 of the edge defect 100. Thus, the edge defect 100 is essentially arranged between the respective two tangents 106a, 106b, 108a, 108b. The Feret diameter is determined as the distance between the respective tangents 106a, 106b, 108a, 108b. In particular, the distance between the tangents 106a, 106b, 108a, 108b along a respective line 112a, 112b perpendicular to the tangents 106a, 106b, 108a, 108b.

Thus, first Feret diameter is determined by fitting the pair of parallel tangents 106a, 108a to the boundary 110 of the edge defect 100 in the first orientation 104a around the edge defect 100. The line 112a is the distance between the tangents 106a, 108a and therefore the first Feret diameter.

Similarly, the second Feret diameter is determined by fitting the pair of parallel tangents 106b, 108b to the boundary 110 of the edge defect 100 in a second orientation 104b around the edge defect 100. The line 112b is the distance between the tangents 106b, 108b and therefore the second Feret diameter.

The first orientation 104a and the second orientation 104b differ from each other in that the pairs of tangents 106a, 106b, 108a, 108b are at an angle to each other.

The distance between the pairs of tangents 106a, 106b, 108a, 108b determine the Feret diameter for a particular orientation 104a, 104b. The maximum Feret diameter of the edge defect 100 may be determined when two parallel tangents are in such an orientation around the edge defect 100 that the distance between these two parallel tangents is the maximum of all possible orientations around the edge defect 100. In other words, the maximum Feret diameter of the edge defect 100 is determined when two parallel tangents are positioned around the edge defect 100 to give the greatest distance between them.

There may be further edge defects 100 along the edge 102, which are not shown in Fig. 1. The Feret diameter may be determined for each of the further edge defects 100 as outlined above.

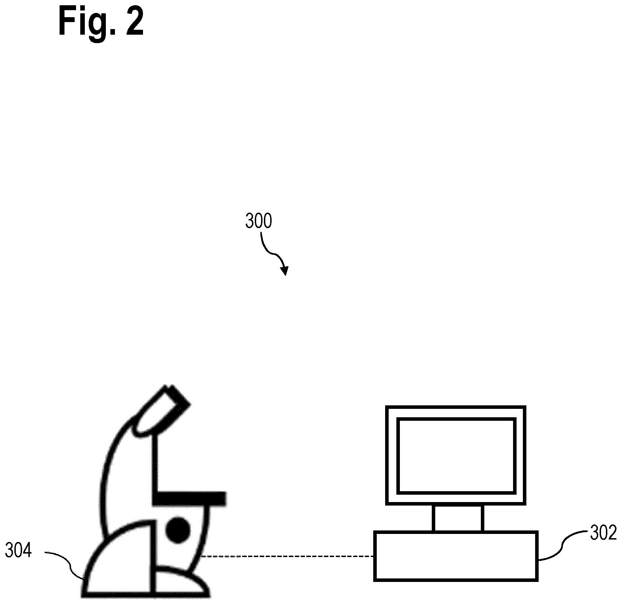

Figure 2 is a flow diagram of a method for characterising at least one edge defect of a workpiece. The method starts in step S200. In step S202 a Feret diameter of an edge defect, such as the edge defect 100, is determined. The Feret diameter may be determined as described above for Fig. 1. Thus, two parallel tangents 106a, 106b, 108a, 108b, may be fitted to the edge defect 100 and the distance along a perpendicular line 112a, 112b between the tangents 106a, 106b, 108a, 108b may be determined as the Feret distance of the edge defect 100.

Prior to the step S202 or in the step S202 imaging data of at least part of an edge 102, along which the edge defect 100 is arranged, may be provided. For example, the imaging data may be generated by means of an imaging device. Additionally, the edge defect 100 may be identified in the imaging data, for example using image processing methods such as image segmentation. In particular, the boundary 110 of the edge defect 100 may be identified in the imaging data and the two parallel tangents 106a, 106b, 108a, 108b may be fitted to the boundary 110.

In a particular embodiment, the edge defect 100 is identified in the imaging data based on a method for detecting edge defects on at least one workpiece. This method is detailed further following the description of the method for characterising at least one edge defect of a workpiece. Alternative methods for detecting the edge defect 100 are equally applicable.

In step S204 the edge defect 100 may be characterised based on the Feret diameter determined in the step S202. The characterisation of the edge defect 100 may include comparing the Feret diameter of the edge defect 100 to a Feret diameter threshold value. For example, in case the determined Feret diameter of the edge defect 100 is larger than the threshold value, the edge defect 100 is characterised as defective. The workpiece which comprises the edge defect 100 may similarly be characterised as defective.

The method ends in step S206.

Optionally, in step S204 the maximum Feret diameter of the edge defect 100 may be determined. For example, the maximum Feret diameter may be determined by determining a plurality of Feret diameters at different orientations 104a, 104b around the edge defect 100 and determining the maximum Feret diameter as the Feret diameter of the plurality of Feret diameters that has the greatest distance 112a, 112b. In particular, this may be achieved by iteratively measuring the Feret diameter for incremental angles around the edge defect 100.

In an optional step, the characterisation of the edge defect 100 may be used to generate an output. For example, a report may be generated, which includes the characterisation and/or the determined Feret diameter of the at least one edge defect 100. For example, the output may be generated for each of the edge defects 100 of the edge of the workpiece individually or for all edge defects 100 of the edge of the workpiece together.

As mentioned above, the edge defect 100 may be identified in the imaging data based on a method for detecting edge defects on at least one workpiece. This method is described in the following as an example of a suitable method. Alternative methods for detecting the edge defect 100 are equally suitable.

In a step S104 of the method for detecting edge defects on at least one workpiece, an edge intensity image is generated based on the imaging data of the at least part of an edge 102. The edge intensity image may be generated by determining intensity changes in the imaging data along particular directions, for example along vertical and/or horizontal directions. The edge intensity image may be generated by determining derivatives along these directions. For example, the derivatives may be determined by a Sobel filter, a Prewitt filter, a Laplace filter, or a Gabor filter.

Prior to determining intensity changes, the imaging data may optionally be converted to greyscale in step S104, in particular in case the imaging data comprises colour information. Thus, the determined edge intensity may be based on the sharpness of changes in brightness between adjacent pixels of the imaging data. Similarly, the resulting edge intensity image may be a greyscale image. Pixels of the imaging data located in regions with a sharp intensity transition are represented in the edge intensity image by pixels of high intensity. Conversely, pixels of the imaging data located in regions with a smooth intensity transition are represented in the edge intensity image by pixels of low intensity. In particular, this may highlight the at least part of an edge of the at least one workpiece.

In step S106 a colour difference image is generated based on the imaging data of the at least part of an edge 102. The colour difference image may be generated by determining the distance of each pixel colour value of the pixels of the imaging data to an average background colour value of the imaging data.

In particular, the background may be the part of the imaging data that does not include the workpiece and/or the edge. Preferably, when providing the imaging data, the workpiece is imaged over a uniform background, in particular of a known colour.

Based on this, the background, in particular respective pixels, can be sampled in the imaging data and the average background colour value may be determined.

Prior to determining the distance of each pixel colour value, the imaging data may optionally be converted to a (perceptually) uniform colour space in step S106. A uniform colour space is a colour representation system in which equal numerical differences correspond to equal perceived differences in colour. In an ideal uniform colour space, a given distance between any two colours should reflect the same amount of perceptual difference, regardless of their position within the colour space. An example of a suitable uniform colour space is the CIELAB or L*a*b colour space.

The resulting colour difference image may be a greyscale image. Pixels of the imaging data located in the background are represented in the colour difference image by pixels of low intensity. Conversely, pixels of the imaging data located in the foreground, in particular, the workpiece, are represented in the edge intensity image by pixels of various intensities. In particular, this may highlight the workpiece.

The steps S104 and S106 may be carried out sequentially. Alternatively, the steps S104 and S106 may be carried out in parallel.

In step S108 the edge intensity image and the colour difference image are segmented in order to generate a respective binary edge intensity image and a respective binary colour difference image.

In particular, each of the binary edge intensity image and the binary colour difference image may be generated by comparing intensity values of each pixel of the edge intensity image and the colour difference image to a threshold and assigning the respective pixel of the binary edge intensity image and the binary colour difference image a value of 1 or 0. Separate thresholds may be defined for the edge intensity image and the colour difference image. In particular, the threshold may be chosen automatically based on the pixel intensity distribution of the respective image.

In case the steps S104 and S106 were performed in parallel, the segmentation of step S108 may be performed in parallel for both the edge intensity image and the colour difference image. In case the steps S104 and S106 were performed sequentially or in another sequence, the step S108 can start with segmenting the edge intensity image or the colour difference image once the respective previous step S104 or S106 is finished.

In step S110 the binary edge intensity image and the binary colour difference image are combined in order to generate a combined binary mask. The combination may be performed by a logical OR operation, in particular a pixel-wise logical OR operation.

For example, pixels of the imaging data representing the workpiece and the edge may have been assigned a value of 1 in the binary colour difference image and the binary edge intensity image, respectively. Conversely, the background may have been assigned a value of 0 in the binary colour difference image. In the binary edge intensity image, the background and part of the workpiece (without the edge) may have been assigned a value of 0. Based on the OR operation, in the combined binary mask the pixels representing the edge and the workpiece are assigned a value of 1 and the background is assigned a value of 0. Thus, the workpiece and the edge are clearly separated from the background in the combined binary mask.

In step S112 a curve is fitted to the at least part of an edge of the workpiece based on the combined binary mask. The curve may be a spline or a smoothing spline, for example. The curve may be fitted along the edge, in particular to boundary pixels of the combined binary mask. In particular, the boundary pixels may be those pixels of the combined binary mask that are at the border between the foreground and the background. For example, the boundary pixels may be (foreground) pixels assigned a value of 1 that are immediately bordering a (background) pixel assigned a value of 0. When fitting the curve, a measure of deviation of the curve from the boundary pixels may be minimised.

In an embodiment of the method, when fitting the curve in step S112, the boundary pixels may be weighted based on their distance from the ideal edge or from the fitted curve. In particular, the weighing may be based on each pixel's signed distance from the fitted curve, for example, such that a boundary pixel that is at a greater distance from the curve is weighted less than a boundary pixel at a lesser distance from the curve. For example, the step S112 may include iteratively fitting the curve to the boundary pixels. For example, initially all boundary pixels may be assigned equal weights. In subsequent iterations the boundary pixels are weighted based on their distance to the fitted curve. The iterations may be carried out until the fitted curve converges to the (ideal) edge of the workpiece. In particular, this may result in boundary pixels on or of protrusions from the edge of the workpiece being weighted less when fitting the curve.

In step S114, an edge defect is detected on the edge based on the curve fitted to the edge.

The method ends in a step S116.

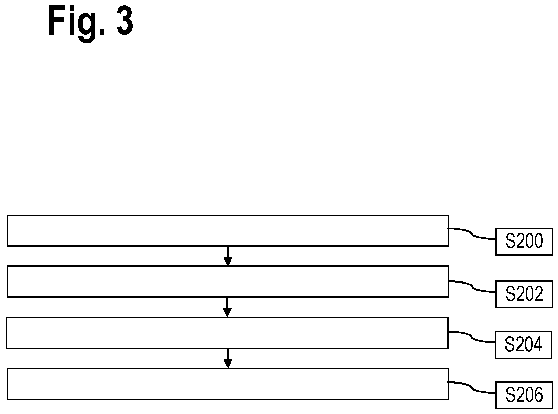

Figure 3 is a schematic view of a system 300 configured to carry out the method for characterising at least one edge defect of a workpiece as described in this document. In particular, the system 300 may comprise a control unit or a computer 302 configured to carry out the method. Additionally, the system 300 may comprise an imaging device 304, such as a microscope, configured to image at least part of an edge 102, in particular the edge defect 100, of the workpiece. The computer 302 may be connected with the imaging device 304 and direct the imaging device 304 to image the at least part of an edge 102, in particular the edge defect 100, of the workpiece. The imaging data resulting from the imaging of the edge defect 100 may be processed further by the computer 302. For example, the edge defect 100, in particular its boundary 110, may be identified in the imaging data by means of the computer 302. Additionally, the Feret diameter may be determined and the edge defect 100 be characterised by means of the computer 302.

Alternatively, the system 300 may be integrated in the microscope 304. In particular, the microscope 304 may be integrated with the control unit configure to carry out the method. This enables a compact system for characterising at least one edge defect of a workpiece. The control unit may comprise an integrated circuit, such as a field programmable gate array, configured to carry out the method for characterising at least one edge defect of a workpiece, for example.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of Reference Signs

- 100: Edge defect
- 102: Edge of workpiece
- 104a: Orientation of second Feret diameter
- 104b: Orientation of first Feret diameter
- 106a, 108a: Parallel tangents of first Feret diameter
- 106b, 108b: Parallel tangents of second Feret diameter
- 110: Boundary of edge defect
- 112a: Distance between parallel tangents of first Feret diameter
- 112b: Distance between parallel tangents of second Feret diameter
- 300: System for characterising at least one edge defect of a workpiece
- 302: Computer
- 304: Imaging device

## Claims

1. A method for characterising at least one edge defect (100) of a workpiece comprising the following steps:
determining a Feret diameter of the at least one edge defect (100), and
characterising the at least one edge defect (100) based on the determined Feret diameter.

2. The method according to claim 1, wherein imaging data of at least part of an edge (102) of the workpiece is provided.

3. The method according to one of the preceding claims, wherein the at least one edge defect (100) is identified, in particular in the image of the part of the edge (102) of the workpiece.

4. The method according to one of the preceding claims, wherein the Feret diameter is the maximum Feret diameter.

5. The method according to one of the preceding claims, wherein a plurality of Feret diameters of the at least one edge defect (100) is determined.

6. The method according to claim 5, wherein each of the Feret diameters of the plurality of Feret diameters is determined at a different orientation.

7. The method according to one of the preceding claims, wherein the at least one edge defect (100) is characterised as one of: defective or non-defective.

8. The method according to one of the preceding claims, wherein in the step of characterising the at least one edge defect (100), the Feret diameter of the at least one edge defect (100) is compared to a threshold value.

9. The method according to one of the preceding claims, wherein an output is generated based on the determined Feret diameter.

10. The method according to one of the preceding claims, wherein the at least one edge defect (100) is a burr or a delamination.

11. A system (300) for characterising at least one edge defect (100) of a workpiece, the system (300) comprising means (302, 304) configured to carry out the method according to one of the preceding claims.

12. The system according to claim 11, comprising an imaging device (304) configured to image at least part of an edge (102) of the workpiece.
